# EUROPÄISCHE PATENTANMELDUNG

(11) **EP 1 897 678 A1**
(43) Veröffentlichungstag der Anmeldung: **12.03.2008**
(21) Anmeldenummer: 07012115.7
(22) Anmeldetag: 21.06.2007
(51) Int. Cl.: B29C 65/74

(54) **Vorrichtung zum Längstrennschweissen von aufeinanderliegenden Folienbahnen**

(30) Priorität: 08.09.2006 DE 102006042822
(71) Anmelder: Beck Packautomaten GmbH & Co., 72636 Frickenhausen (DE)
(72) Erfinder: Schumayer, Ulrich, 72622 Nürtingen (DE)
(74) Vertreter: Neumann, Ernst Dieter

(57) **Zusammenfassung**

Längstrennschweißvorrichtung für aufeinanderliegende Folienbahnen zur Verwendung in einer Folienverpackungsmaschine, wobei die Folienbahnen in der Folienverpackungsmaschine in einer Transportrichtung fortbewegt werden, wobei eine obere Folienbahn und eine untere Folienbahn unter Einhüllung von zwischen ihnen einlaufenden Packgutstücken mit ihren Rändern zusammengeführt und jeweils zwischen zwei Packgutstücken quer zu den Folienbahnen verschweißt und abgetrennt werden, und wobei die Folienbahnen vorher oder daran anschließend an zumindest einer Längsseite der Packgutstücke unter Abtrennen von überstehenden Rändern längsverschweißt werden, wobei die Längsschweißvorrichtung ein erstes Riemenpaar von antreibbaren, über zumindest jeweils zwei Rollen 13, 15; 14, 16 laufenden Endlosriemen 11, 12 umfaßt, deren Laufrichtung in Transportrichtung ausgerichtet ist und die jeweils die Folienbahnen zwischen sich einziehen und führen, ein zweites Riemenpaar von antreibbaren, über jeweils zumindest zwei Rollen 19, 13; 15, 20; 14, 16 laufenden Endlosriemen 17, 18 umfaßt, deren Laufrichtung in Transportrichtung ausgerichtet ist und die jeweils die Folienbahnen zwischen sich einziehen und führen, wobei zwischen dem ersten Riemenpaar 11, 12 und dem zweiten Riemenpaar 17, 18 ein Längsspalt 24 gebildet ist, in dem ein Schweißmesser 38 angeordnet ist, wobei in Transportrichtung vor dem Schweißmesser 38 eine Spannrolle 52 im Längsspalt 24 angeordnet ist, die mit ihrem Umfang die Führungsebene zwischen den Riemenpaaren 11, 12; 17, 18 durchdringt.

## Beschreibung

Die Erfindung betrifft eine Längstrennschweißvorrichtung für Folienbahnen zur Verwendung in einer Folienverpackungsmaschine, wobei die Folienbahnen- in der Folienverpackungsmaschine in einer Transportrichtung fortbewegt werden, wobei eine obere Folienbahn und eine untere Folienbahn unter Einhüllung von zwischen ihnen einlaufenden Packgutstücken mit ihren Rändern zusammengeführt und jeweils zwischen zwei Packgutstücken quer zu den Folienbahnen verschweißt und abgetrennt werden und wobei die Folienbahnen vorher oder daran anschließend an zumindest einer Längsseite der Packgutstücke unter Abtrennen von überstehenden Rändern längsverschweißt werden.

Die Erfindung betrifft weiterhin eine Folienverpackungsmaschine mit einer Längstrennschweißvorrichtung der vorgenannten Art.

Aus der DE 100 21 470 B4 ist eine Schlauchbeutelverpackungsmaschine mit Querstreckmitteln bekannt, die im Bereich einer in Transportrichtung hinter einer Querschweißvorrichtung angeordneten seitlichen Längsschweißstation angeordnet sind. Diese Querstreckmittel umfassen jeweils auf den Transportweg der Packgutstücke bezogen innenliegende Riemenpaare, die parallel zur Transportrichtung verlaufen, sowie bezogen auf den Transportweg der Packgutstücke außenliegende Riemenpaare, die mit der Transportrichtung einen nach außen angetragenen Winkel bilden. Hiermit wird bezweckt, daß im Bereich der Längsschweißstation die doppelt liegenden Folienbahnen straff gespannt sind.

Aus der DE 31 18 008 A1 ist eine Trennschweißvorrichtung für vorgeschobene aufeinanderliegende Folienbahnen bekannt, bei der die die Packgutstücke einhüllenden Folienbahnen mit ihren Rändern unterhalb der Packgutstücke zusammengeführt werden, um dort einem Längstrennschweißen unterzogen zu werden. Die Transportbänder für die Packgutstücke sind hierbei im Bereich einer Trennschweißvorrichtung mittig geteilt. Auch bei dieser Trennschweißvorrichtung sind ein erstes Riemenpaar und ein zweites Riemenpaar vorgesehen, die miteinander einen Längsspalt bilden, wobei die Riemenpaare in Transportrichtung voneinander divergieren. Im genannten Längsspalt ist ein feststehendes Schweißmesser angeordnet, das die Führungsebene zwischen den Riemenpaaren durchdringt und die doppelt liegenden Folienbahnen an ihren überstehenden Rändern trennt und längsverschweißt.

Konstruktiv ist die Darstellung divergierender Riemenpaare relativ aufwendig. Die vorbeschriebenen Mittel zur Straffung der aufeinanderliegenden Folienbahnen im Bereich des Trennschweißmessers verhindern nicht zuverlässig, daß aufgrund unterschiedlicher Verzerrungen der beiden Bahnlagen ungleichmäßige Faltenformationen entstehen, die zwar ein Abtrennen der überstehenden Randstreifen nicht beeinträchtigen, wohl jedoch ein durchlaufendes störungsfreies Verschweißen der beiden Folienlagen miteinander an den Trennähten.

Es bilden sich somit Schlaufen und Falten in einer der Folienlagen, während die andere Folienlage glattgezogen ist oder ihrerseits Falten und Schlaufen an anderen Stellen aufweist. Im Ergebnis wird ein hermetisches Einschweißen der Packgutstükke hierdurch verhindert.

Hiervon ausgehend ist es Aufgabe der vorliegenden Erfindung, eine Längstrennschweißvorrichtung für Folienbahnen sowie eine damit ausgerüstete Verpackungsmaschine bereitzustellen, die die Qualität der seitlichen Längsverschweißung der Folienbahnen an den Packgutstücken verbessert und/oder die Verwendung von schwer schweißbaren sperrigen Folienqualitäten zuläßt.

Die Lösung hierfür besteht in einer Längstrennschweißvorrichtung für Folienbahnen, die in einer Folienverpackungsmaschine in einer Transportrichtung fortbewegt werden, wobei eine obere Folienbahn und eine untere Folienbahn unter Einhüllung von zwischen ihnen einlaufenden Packgutstücken mit ihren Rändern zusammengeführt und jeweils zwischen zwei Packgutstücken quer zu den Folienbahnen verschweißt und abgetrennt werden und daran anschließend an zumindest einer Längsseite der Packgutstücke unter Abtrennen von überstehenden Rändern verschweißt werden, wobei die Längstrennschweißvorrichtung ein erstes Riemenpaar von an den Rändern der Folienbahnen angeordneten antreibbaren, über zumindest jeweils zwei Rollen laufenden Endlosriemen umfaßt, deren Laufrichtung in Transportrichtung ausgerichtet ist und die jeweils mit einem Trum auf eine der Folienbahnen von einer Seite einwirken, und ein zweites Riemenpaar von an den Rändern der Folienbahnen angeordneten antreibbaren über zumindest jeweils zwei Rollen laufenden Endlosriemen aufweist, deren Laufrichtung in Transportrichtung ausgerichtet ist und die jeweils mit einem Trum auf eine der Folienbahnen von einer Seite einwirken, wobei die Riemenpaare die Folienbahnen zwischen sich einziehen und führen und wobei zwischen dem ersten Riemenpaar und dem zweiten Riemenpaar ein Längsspalt gebildet ist, in dem ein Schweißmesser angeordnet ist, und wobei in Transportrichtung vor dem Schweißmesser eine drehbare Spannrolle im Längsspalt angeordnet ist, die mit ihrem Umfang die Führungsebene zwischen den Riemenpaaren durchdringt. Mit den hier angegebenen Mitteln werden die Folienlagen nicht großflächig gespannt, sondern zwischen den beiden Riemenpaaren möglichst eng geführt, wobei die erfindungsgemäße, insbesondere federnd gelagerte Spannrolle die Folienbahnen vor dem Erreichen des Schweißmessers aus der Führungsebene auslenkt und zwar durch die federnde Anstellung der Spannrolle genau so weit, wie es die aktuell in den Folienbahnen vorhandenen Falten erfordern. Durch die leichtlaufende frei drehbare Spannrolle wird jeglicher Widerstand gegen die störungsfreie Förderung der Folienbahnen vermieden. Wie erwähnt, ist die Spannrolle vorzugsweise federnd abgestützt, wobei sie in einer Geradführung verschiebbar sein kann oder an einem Schwenkhebel pendelnd aufgehängt sein kann. Es ist auch möglich, die Spannrolle synchron zu den Riemenpaaren aktiv anzutreiben, um die Förderung der Folienbahnen zu unterstützen.

In bevorzugter Weise ist die Achse der Spannrolle bezüglich der Führungsebene zwischen den Riemenpaaren auf der Gegenseite zum Schweißmesser angeordnet.

Die Folienbahnen werden damit dem Schweißmesser entgegengerichtet ausgelenkt.

Nach besonders günstiger Weiterbildung ist nach der Spannrolle neben dem Schweißmesser ein zur Spannrolle fluchtend im Längsspalt angeordnetes Trennblech angeordnet, dessen Kopflinie etwa mit der Peripherie der Spannrolle übereinstimmt, so daß die ausgelenkten Folienbahnen zwischen Spannrolle und Schweißmesser sich nicht erneut verzerren können, sondern die Folienbahnen bis zum Einlauf in das Schweißmesser in ihrer ausgelenkten gestrafften ideal aufeinanderliegenden Form bleiben. Dieses Trennblech erstreckt sich in Transportrichtung über das Schweißmesser hinaus und verhindert dadurch, daß die gerade getrennten und verschweißten Trennkanten nicht wieder zusammenschweißen.

Das Trennblech kann verstellbar angeordnet sein, insbesondere in Langlöchern verstellbar sein.

Das Schweißmesser kann sowohl als feststehende Scheibe als auch als rotierende Scheibe mit ortsfester Achse ausgebildet sein. Eine entsprechende Beheizung des Schweißmessers zum Trennschweißen ist erforderlich.

Um die Folienbahnen beim Einlaufen in die erfindungsgemäße Vorrichtung einem wenn auch geringfügigen Querstraffungsprozeß zu unterziehen, wird vorgeschlagen, daß das vom Transportweg der Packgutstücke weiter wegliegende zweite Riemenpaar in Transportrichtung früher beginnt als das nahe am Transportweg der Packgutstücke liegende erste Riemenpaar.

In Ergänzung hierzu ist vorgesehen, daß schräg im Transportweg der Packgutstücke liegende Leitbleche im Bereich zwischen dem Beginn des zweiten Riemenpaares und dem Beginn des ersten Riemenpaares vorgesehen sind. Bevorzugt ist das zweite Riemenpaar deutlich breiter als das erste Riemenpaar. Die aufeinanderliegenden, bereits von dem zweiten Riemenpaar erfaßten Folienbahnen werden somit von den Leitblechen geringfügig gespannt, bevor die Folienbahnen auch vom ersten Riemenpaar erfaßt werden. Im Bereich des Längsschlitzes herrscht hierdurch eine gewisse Querspannung. Die Spannung des Folienmaterials an den Packgutstücken hingegen wird mit dieser Vorrichtung auf dem Weg durch die Vorrichtung nicht wesentlich beeinflußt.

Die Riemenpaare verlaufen bevorzugt parallel zueinander und parallel zum Transportweg der Packgutstücke. Der Transport der Packgutstücke in der Folienverpakkungsmaschine erfolgt in üblicher Weise mittels Förderbändern oder Rollenbahnen.

Die Endlosriemen beider Riemenpaare können synchron angetrieben werden, insbesondere indem zumindest jeweils zwei Rollen beider Riemenzüge miteinander in Verzahnungseingriff sind. Die Riemenzüge können hierbei zumindest ein gemeinsames Rollenpaar aufweisen. Unmittelbar ist hierbei nur eine der beiden Rollen anzutreiben. Wenn die Endlosriemen in bevorzugter Ausführung als Zahnriemen ausgeführt sind, ist ein schlupffreier Antrieb und ein schlupffreies Ablaufen der Endlosriemen der Riemenpaare aufeinander sichergestellt.

Ein bevorzugtes Ausführungsbeispiel einer erfindungsgemäßen Querstraffungs- und Längstrennschweißvorrichtung ist in den Zeichnungen dargestellt und wird nachstehend beschrieben.

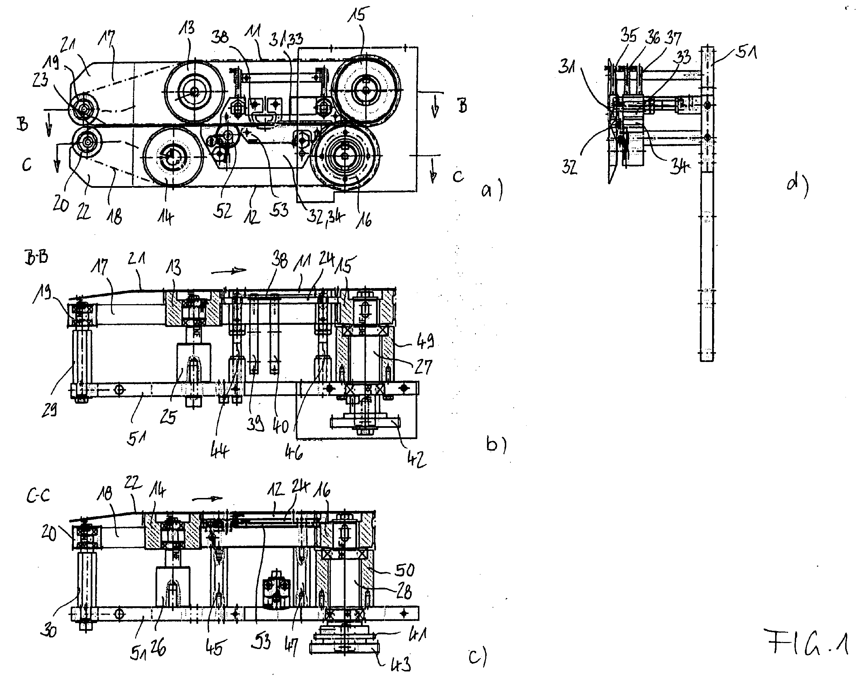

Figur 1 zeigt die erfindungsgemäße Vorrichtung
a) in Seitenansicht
b) im Schnitt B-B nach Darstellung a)
c) im Schnitt C-C nach Darstellung a)
d) in Stirnansicht;

In Figur 1 b) sind die Teile, wie sie in Figur 1 c) dargestellt sind, weggelassen.

Figur 2 zeigt Teile der Vorrichtung nach Figur 1 in vergrößerter Einzelheit
a) in Seitenansicht
b) in Draufsicht auf den Längsspalt zwischen den Riemenpaaren

Die einzelnen Darstellungen der Figur 1 werden nachstehend gemeinsam beschrieben.

Die erfindungsgemäße Vorrichtung stellt eine Baugruppe einer Folienverpackungsmaschine dar, in der einzelne Packgutstücke in endlose Folienbahnen eingehüllt werden, wobei eine Schlauchhülle um die Packgutstücke gebildet wird, die bezogen auf die Darstellungen a) bis c) von links nach rechts geführt werden und hierbei, bezogen auf die Darstellung d) in Transportrichtung seitlich links an der Baugruppe vorbeigeführt werden. Die Schlauchhülle wird in einer in Bezug auf die Darstellungen a) bis c) links anzunehmenden Quertrennvorrichtung oder Querschweißvorrichtung jeweils zwischen den einzelnen Packgutstücken abgetrennt; dabei wird zugleich eine obere Folienbahn und eine untere Folienbahn miteinander verschweißt. Die seitlichen rechten Ränder der oberen und unteren Folienbahnen werden nach diesem Querabtrennen aufeinanderliegend in die erfindungsgemäße Vorrichtung eingeführt und unter Erzeugung einer Längsschweißnaht zwischen der oberen Folienbahn und der unteren Folienbahn längs abgetrennt. Die oberen und unteren Folienbahnen können hierbei Bestandteile einer einheitlichen Folienbahn sein, die die Packgutstükke an der Gegenseite einhüllt oder sie können zwei voneinander getrennte Folienbahnen sein, die an beiden Längskanten miteinander abzutrennen und längs zu verschweißen sind.

Die gesamte Vorrichtung wird von einer Platte 51 getragen, die mit geeigneten, hier nicht dargestellten Mitteln an einer Folienverpackungsmaschine zu befestigen ist, wobei in den Darstellungen b) und c) die Transportrichtung und die prinzipielle Lage der Packgutstücke im Verhältnis zur Vorrichtung jeweils durch einen Pfeil bezeichnet ist. Die erfindungsgemäße Vorrichtung umfaßt zur Führung der Folienränder zwei Riemenpaare; ein erstes Riemenpaar 11, 12 läuft über ein oberes Rollen- oder Scheibenpaar 13, 15 und ein unteres Rollen- oder Scheibenpaar 14, 16 und liegt unmittelbar am Transportweg der Packgutstücke. Ein zweites Riemenpaar 17, 18 läuft über die Rollen- oder Scheibensätze, die aus den Rollen- oder Scheibenpaaren 13, 15 und 14, 16 sowie ergänzenden Umlenkrollen oder -scheiben 19 und 20 gebildet werden. Dieses Riemenpaar 17, 18 ist näher an die Quertrennschweißvorrichtung herangeführt und liegt vom Transportweg der Packgutstücke weit entfernt. Aufgrund der teilweisen Identität der Scheibensätze verlaufen die Riemenpaare 11, 12 einerseits und 17, 18 andererseits zueinander parallel. Die endlosen Riemen sind als Zahnriemen ausgeführt; dementsprechend sind die Scheiben als Zahnriemenscheiben ausgebildet. Zum Transportweg der Packgutstücke hin sind die Riemenpaare mit ihren Scheibensätzen durch ebenfalls paarweise ausgebildete Leitbleche 21, 22 abgedeckt, die an feststehenden Achsen der Scheiben 19, 13, 20, 14 befestigt sind. Zwischen den Leitblechen 21, 22 ist ein Längsschlitz 23 ausgebildet, der in Höhe einer Auflage- und Förderebene der Packgutstücke liegt und die Führungsebene der Folienbahnen definiert. Die Leitbleche 21, 22 sind an der Einlaufseite nach außen abgeknickt und im weiteren parallel zu den Riemenpaaren. In Längsrichtung sind die Leitbleche 21, 22 vorzugsweise jeweils einstückig.

Zu den Rollen 13, 19 gehören die stehenden Achsen 25, 29; zu den Rollen 14, 20 die stehenden Achsen 26, 30. Die Rollen 15, 16 sind auf drehenden Wellen 27, 28 befestigt, die in stehenden Lagerböcken 49, 50 gelagert sind, die an der Platte 51 angeschraubt sind. Die untere Welle 28 wird über ein Zahnrad 41 angetrieben, während die Wellen 27, 28 über ineinandergreifende Zahnräder 42, 43 synchronisiert werden. Innerhalb des Endlosriemens 11 befindet sich eine Anpreßschiene 31, die mit federelastischen Mitteln auf den unteren Trum des Riemens 11 gedrückt wird. Innerhalb des Endlosriemens 12 befindet sich eine Stützschiene 32, die den oberen Trum des Riemens 12 gegen die Auflast der Anpreßschiene 31 abstützt. Parallel zu diesen Anpreß- und Stützschienen liegen innerhalb der Riemenpaare 17, 18 eine Anpreßschiene 33 und eine Stützschiene 34, die im wesentlichen gleich wie die vorhergenannten ausgebildet sind, jedoch entsprechend der Riemenbreite breiter sind. Während die Anpreßschiene 31 von einreihigen elastischen Federmitteln 35 beaufschlagt wird, wird die Anpreßschiene 33 von doppelreihigen elastischen Federmitteln 36, 37 beaufschlagt. Zwischen den Riemenpaaren 11, 12, 17, 18 ist ein Längsspalt 24 gebildet; in diesem befindet sich in üblicher Weise ein Trennschweißmesser 38, das die beiden aufeinanderliegenden Folienbahnen, die von den Riemenpaaren geführt werden, trennt und längsverschweißt, wobei überstehende Randstreifen abgetrennt und hinter dem Auslauf aus den Riemenpaaren weggeführt werden. Eine Halterung für das Trennschweißmesser 38 ist mit 39, 40 bezeichnet.

Während die untere Folienbahn im Prinzip eben auf einem Förderband aufliegt und auch in der Ebene ihrer Auflage getrennt wird, muß die obere Folienbahn jeweils seitlich an den Packgutstücken heruntergezogen werden und in die Ebene der unteren Folienbahn geführt werden. Dies betrifft sowohl die seitliche Längskante als auch in der Querabtrenn- und Schweißvorrichtung jeweils Querbereiche der oberen Folienbahn. Es ist leicht verständlich, daß es hierdurch zur Faltenbildung kommt, da die obere Folienbahn gegenüber der unteren mehrfach verzogen wird.

Soweit die beiden Folienbahnen jedoch unterschiedliche Faltenbildungen aufweisen, kann es passieren, daß in der Längsschweißvorrichtung nur Trennvorgänge, nicht jedoch zuverlässige Schweißvorgänge ablaufen. Es kommt infolgedessen zu Unterbrechungen in der Längsschweißnaht, was im Hinblick auf eine hermetische Verpakkung der Packgutstücke unakzeptabel ist. Um dieses Phänomen zu vermeiden, ist gemäß der Erfindung unmittelbar vor der Trennschweißvorrichtung 38 eine erfindungsgemäße Spannrolle 52 vorgesehen, die etwa in Linie bzw. in Flucht mit der Trennschweißvorrichtung 38 liegt und in den Längsspalt 24 zwischen den beiden Riemenpaaren 11, 12, 17, 18 hineinragt. Die Spannrolle 52 liegt dabei im wesentlichen im Bereich der unteren Riemen 12, 18, steht jedoch über den Längsspalt 23 zwischen den Leitblechen 21, 22 in den Bereich der oberen Riemen 11, 17 nach oben vor. An die Spannrolle 52 schließt sich ein ebenfalls in den Bereich der oberen Riemen 11, 17 reichendes Trennblech 53 an, das der Längsschweißvorrichtung 38 parallelgeschaltet ist. Die beiden Folienbahnen, die durch die Riemenpaare eng geführt sind, erfahren dabei eine zusätzliche Auslenkung bzw. Verzerrung im Bereich des Trennschweißmessers 38, so daß eventuelle Faltenbildungen in beiden Folienbahnen in übereinstimmende Konfiguration gebracht werden. Auch wenn die übereinanderliegenden Folien nicht völlig faltenfrei sind, ist damit doch sichergestellt, daß es zu einer fehlerfreien Längsschweißung in der Längsschweißvorrichtung kommt. Die erfindungsgemäße Spannrolle 52 ist federnd abgestützt und lenkt so die Folienbahnen bereits vor dem Erreichen des Trennschweißmessers 38 aus der Führungsebene aus, und zwar durch die federnde Aufhängung genau so weit, wie es die aktuell in den Folienbahnen vorhandenen Falten erfordern. Durch die leichtlaufende Spannrolle 52 sinkt der vom Trennblech 53 auf die Folienbahnen ausgeübte Widerstand auf einen vernachlässigbaren Wert, so daß Störungen am Folieneinlauf minimiert und das Schweißergebnis verbessert wird.

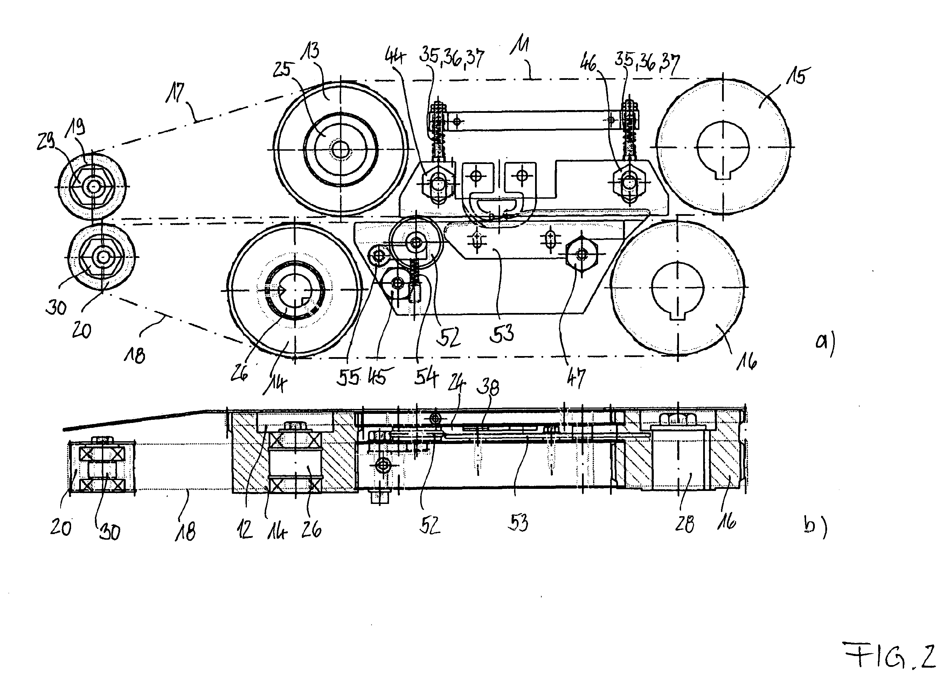

In Figur 2 sind gleiche Einzelheiten wie in Figur 1 mit gleichen Bezugsziffern belegt; auf die vorangehende Beschreibung wird Bezug genommen. Die beiden Darstellungen der Figur 2 werden gemeinsam beschrieben. Es sind ergänzend die an der Platte 51 angeschraubten Halterungen 44, 46 für die Anpreßschienen 31, 33, sowie die an der Platte 51 angeschraubten Halterungen 45, 47 für die Stützschienen 32, 33 erkennbar. An den Anpreßschienen 31, 33 sind die Federmittel 35, 36, 37 erkennbar. In der Seitenansicht ist die Anordnung der Spannrolle 52 mit ihren Federmitteln 54 an einer Halterung 55 erkennbar, die an der unteren Stützschiene 34 befestigt ist. Im Längsspalt 24 zwischen den Riemen 12, 16 wird die Zuordnung von Spannrolle 52, Schweißvorrichtung 38 und Trennblech 53 erkennbar, letztere liegen eng nebeneinander, wobei das Trennblech 53 mit der Spannrolle etwa in Flucht liegt und zumindest hinter der Trennschweißvorrichtung 38 die Führungsebene nach oben durchdringt, um ein erneutes Zusammenschweißen der Trenn- und Schweißkanten zu verhindern. Das Trennblech 53, das in Langlöchern höhenverstellbar ist, ist in seiner tiefsten Position dargestellt. In einer höheren Position kann es die Auslenkung der Folienbahnen zwischen Spannrolle 52 und Trennschweißmesser 38 unterstützen und aufrechterhalten.

### Bezugszeichenliste

- 11: Riemen
- 12: Riemen
- 13: Riemenscheibe
- 14: Riemenscheibe
- 15: Riemenscheibe
- 16: Riemenscheibe
- 17: Riemen
- 18: Riemen
- 19: Riemenscheibe
- 20: Riemenscheibe
- 21: Leitblech
- 22: Leitblech
- 23: Schlitz
- 24: Längsspalt
- 25: Welle
- 26: Welle
- 27: Welle
- 28: Welle
- 29: Welle
- 30: Welle
- 31: Andrückschiene
- 32: Stützschiene
- 33: Andrückschiene
- 34: Stützschiene
- 35: Federmittel
- 36: Federmittel
- 37: Federmittel
- 38: Trennschweißmesser
- 39: Halterung
- 40: Halterung
- 41: Antriebsrad
- 42: Zahnrad
- 43: Zahnrad
- 44: Halterung
- 45: Halterung
- 46: Halterung
- 47: Halterung

- 49: Lagerbock
- 50: Lagerbock

- 51: Platte
- 52: Spannrolle
- 53: Trennblech
- 54: Federmittel
- 55: Halterung

## Patentansprüche

1. Längstrennschweißvorrichtung für aufeinanderliegende Folienbahnen zur Verwendung in einer Folienverpackungsmaschine, wobei die Folienbahnen, in der Folienverpackungsmaschine in einer Transportrichtung fortbewegt werden, wobei eine obere Folienbahn und eine untere Folienbahn unter Einhüllung von zwischen ihnen einlaufenden Packgutstücken mit ihren Rändern zusammengeführt und jeweils zwischen zwei Packgutstücken quer zu den Folienbahnen verschweißt und abgetrennt werden und wobei die Folienbahnen vorher oder daran anschließend an zumindest einer Längsseite der Packgutstücke unter Abtrennen von überstehenden Rändern längsverschweißt werden, wobei die Längsschweißvorrichtung
ein erstes Riemenpaar von antreibbaren, über zumindest jeweils zwei Rollen (13, 15; 14, 16) laufenden Endlosriemen (11, 12) umfaßt, deren Laufrichtung in Transportrichtung ausgerichtet ist und die jeweils die Folienbahnen zwischen sich einziehen und führen, ein zweites Riemenpaar von antreibbaren, über jeweils zumindest zwei Rollen (19, 13; 15, 20; 14, 16) laufenden Endlosriemen (17, 18) umfaßt, deren Laufrichtung in Transportrichtung ausgerichtet ist und die jeweils die Folienbahnen zwischen sich einziehen und führen,
wobei zwischen dem ersten Riemenpaar (11, 12) und dem zweiten Riemenpaar (17, 18) ein Längsspalt (24) gebildet ist, in dem ein Schweißmesser (38) angeordnet ist,
**dadurch gekennzeichnet,**
**daß** in Transportrichtung vor dem Schweißmesser (38) eine Spannrolle (52) im Längsspalt (24) angeordnet ist, die mit ihrem Umfang die Führungsebene zwischen den Riemenpaaren (11, 12; 17, 18) durchdringt.

2. Vorrichtung nach Anspruch 1,
**dadurch gekennzeichnet,**
**daß** die Spannrolle (52) federnd abgestützt ist.

3. Vorrichtung nach einem der Ansprüche 1 oder 2,
**dadurch gekennzeichnet,**
**daß** die Achse der Spannrolle (52) bezüglich der Führungsebene zwischen den Riemenpaaren (11, 12; 17, 18) auf der Gegenseite zum Schweißmesser (38) angeordnet ist.

4. Vorrichtung nach einem der Ansprüche 1 bis 3,
**dadurch gekennzeichnet,**
**daß** nach der Spannrolle (52) neben dem Schweißmesser (38) ein zur Spannrolle (52) fluchtend im Längsspalt (24) angeordnetes Trennblech (53) angeordnet ist.

5. Vorrichtung nach Anspruch 4,
**dadurch gekennzeichnet,**
**daß** das Trennblech (53) verstellbar angeordnet ist.

6. Vorrichtung nach einem der Ansprüche 1 bis 5,
**dadurch gekennzeichnet,**
**daß** das Schweißmesser (38) feststehend ist.

7. Vorrichtung nach einem der Ansprüche 1 bis 5,
**dadurch gekennzeichnet,**
**daß** das Schweißmesser (38) rotierend mit fester Achse ist.

8. Vorrichtung nach einem der Ansprüche 1 bis 7,
**dadurch gekennzeichnet,**
**daß** das vom Transportweg der Packgutstücke weiter wegliegende zweite Riemenpaar (17, 18) in Transportrichtung früher beginnt als das nahe am Transportweg der Packgutstücke liegende erste Riemenpaar (11, 12).

9. Vorrichtung nach einem der Ansprüche 1 bis 8,
**dadurch gekennzeichnet,**
**daß** das zweite Riemenpaar (17, 18) breiter ist als das erste Riemenpaar (11, 12).

10. Vorrichtung nach einem der Ansprüche 8 oder 9,
**dadurch gekennzeichnet,**
**daß** schräg im Transportweg der Packgutstücke liegende Leitbleche (21, 22) im Bereich zwischen dem Beginn des zweiten Riemenpaares (17, 18) und dem Beginn des ersten Riemenpaares (11, 12) vorgesehen sind.

11. Vorrichtung nach einem der Ansprüche 1 bis 10,
**dadurch gekennzeichnet,**
**daß** die Endlosriemen (11, 12; 17, 18) beider Riemenpaare synchron angetrieben sind.

12. Vorrichtung nach einem der Ansprüche 1 bis 11,
**dadurch gekennzeichnet,**
**daß** die Endlosriemen beider Riemenpaare (11, 12; 17, 18) Zahnriemen sind, die mit verzahnten Antriebs- und Umlenkrollen (19, 13, 15; 20, 14, 16) im Eingriff sind.
